# EUROPÄISCHE PATENTSCHRIFT

(11) **EP 0 522 485 B1**
(45) Veröffentlichungstag und Bekanntmachung des Hinweises auf die Patenterteilung: **03.04.1996**
(21) Anmeldenummer: 92111434.4
(22) Anmeldetag: 06.07.1992
(51) Int. Cl.: A61C 3/025, B24C 9/00

(54) **Bearbeitungsgerät zum Bearbeiten von feinwerktechnischen, insbesondere dentaltechnischen Werkstücken in einem von einem Gehäuse umgebenen Bearbeitungsraum**
Processing apparatus for processing fine technical, especially dental technical workpieces in a machining chamber surrounded by a housing
Appareil de traitement pour traiter des fines techniques, en particulier des pièces d'oeuvre de dentisterie dans une chambre d'usinage entourée d'un boîtier

(30) Priorität: 11.07.1991 DE 4122979
(43) Veröffentlichungstag der Anmeldung: 13.01.1993
(73) Patentinhaber: KALTENBACH & VOIGT GMBH & CO., D-88400 Biberach (DE)
(72) Erfinder: Püschner, Georg, W-7970 Leutkirch (DE)
(74) Vertreter: Schmidt-Evers, Jürgen, Dipl.-Ing.

(56) Entgegenhaltungen:
- EP-A- 0 150 338
- DE-A- 3 119 087
- DE-A- 3 727 441
- DE-U- 8 622 315
- US-A- 3 858 360

## Beschreibung

Die Erfindung bezieht sich auf ein Bearbeitungsgerät nach dem Oberbegriff des Anspruchs 1.

Ein solches Bearbeitungsgerät kann zum Strahlen der Werkstücke mit einer Umlaufstrahleinrichtung oder mit einer Einwegstrahleinrichtung ausgerüstet werden. Bei einer Umlaufstrahleinrichtung wird das benutzte Strahlmittel zwecks mehrfacher Verwendung der Strahldüse wieder zugeführt. Bei einer Einwegstrahleinrichtung wird das Strahlmittel nur einmal benutzt. In beiden Fällen, und aus den vorgenannten Gründen, insbesondere beim Vorhandensein einer Einwegstrahleinrichtung ist es deshalb des öfteren erforderlich, den vorhandenen Strahlmittelbehälter mit Strahlmittel aufzufüllen. Diese Beschickungsmaßnahme soll handhabungsfreundlich und schnell erfolgen, um das Bearbeitungsgerät nur so wenig wie möglich der Benutzung zu entziehen.

Bei einem Bearbeitungsgerät mit einer Einwegstrahleinrichtung ist es denkbar den Strahlmittelbehälter im hinteren Teil des Gehäuses. Aufgrund einer solchen Zugänglichkeit von hinten ist nicht nur der Zugang zum Strahlmittelbehälter selbst erschwert, sondern hierdurch wird auch der erforderliche Platz für das Bearbeitungsgerät vergrößert, weil dahinter ein verhältnismäßig großer Platz zum Beschicken freigehalten werden muß.

Ein Bearbeitungsgerät der eingangs angegebenen Art mit einer Einwegstrahleinrichtung ist in der DE-A-3 119 087 beschrieben. Bei diesem bekannten Bearbeitungsgerät befindet sich der Strahlmittelbehälter in einem auch den Bearbeitungsraum umgebenden Gehäuse, wobei der Strahlmittelbehälter nicht mit einem eigenen Behältergehäuse in einem Hohlraum des Gehäuses angeordnet ist, sondern durch die Wände des Gehäuses gebildet ist, so daß der gebildete Hohlraum ausschließlich den Innenraum des Strahlmittelbehälters bildet, sich bis zur Oberseite des Gehäuses erstreckt und durch eine Öffnung in der Deckenwand des Gehäuses zugänglich ist, die durch einen Deckel verschließbar ist. Bei diesem bekannten Bearbeitungsgerät stellt sich das vorbeschriebene Problem nicht, weil der Strahlmittelbehälter von oben frei zugänglich ist. Bei einem Bearbeitungsgerät mit größerer Höhe oder bei einem hoch angeordneten kleinen Bearbeitungsgerät kann jedoch auch dies problematisch sein, weil ein Beschicken des Strahlmittelbehälters in einer solchen Höhe schwierig ist.

Der Erfindung liegt die Aufgabe zugrunde, ein Bearbeitungsgerät der eingangs angegebenen Art so auszugestalten, daß der Platzbedarf für das Bearbeitungsgerät verringert werden kann und die Beschickung handhabungsfreundlich und schnell erfolgen kann.

Diese Aufgabe wird durch die Merkmale des Anspruchs 1 gelöst. Vorteilhafte Weiterbildungen der Erfindung sind in den Unteransprüchen beschrieben.

Beim erfindungsgemäßen Bearbeitungsgerät ist der Strahlmittelbehälter mit seinem Tragteil durch die vorhandene Gehäuseöffnung in eine Position außerhalb des Gehäuses verstellbar, in der er handhabungsfreundlich gefüllt, gewartet und ggfls. auch repariert werden kann. Es bedarf somit keines unübersichtlichen Hineingreifens in das Gehäuse um zum Strahlmittelbehälter zu gelangen, sondern der Strahlmittelbehälter befindet sich in seiner ausgestellten Position auch in einer ergonomisch günstigen Lage, die die handfreundliche Beschickung gewährleistet. Die Verstellung des Strahlmittelbehälters und seines Tragteils läßt sich in einfacher und praktischer Weise durch z.B. Schiebeführungen verwirklichen, so daß auch das Verstellen des Strahlmittelbehälters handhabungsfreundlich und leicht erfolgen kann.

In den Unteransprüchen enthaltene Weiterbildungen der Erfindung tragen zur Problemlösung bei und zeichnen sich außerdem durch einfache und kostengünstig herstellbare Bauweisen aus, die bei guter Stabilität funktionssicher sind und u.a. auch der Arbeitssicherheit des Bearbeitungsgerätes dienen.

Das erfindungsgemäße Bearbeitungsgerät weist auch eine vorteilhafte Gehäusegestaltung auf, die aufgrund ergonomisch günstiger Formgestaltung ein handhabungsfreundliches Arbeiten im Bearbeitungsraum ermöglicht.

Nachfolgend wird die Erfindung anhand bevorzugter Ausführungsbeispiele und einer Zeichnung näher erläutert. Es zeigt:
- Fig. 1: ein erfindungsgemäßes Bearbeitungsgerät, insbesondere Bearbeitungsgerät, für feinwerktechnische, insbesondere dentaltechnische Werkstücke in perspektivischer Vorderansicht;
- Fig. 2: das Bearbeitungsgerät in der Seitenansicht im vertikalen Schnitt;
- Fig. 3: eine zur Bedienungsseite hin ausziehbare Schublade des Bearbeitungsgeräts zur Aufnahme von mehreren Strahlmittelbehältern;
- Fig. 4: das Bearbeitungsgerät in der Vorderansicht, teilweise geschnitten;
- Fig. 5: einen Strahlmittelbehälter im vertikalen Halbschnitt in vergrößerter Darstellung;

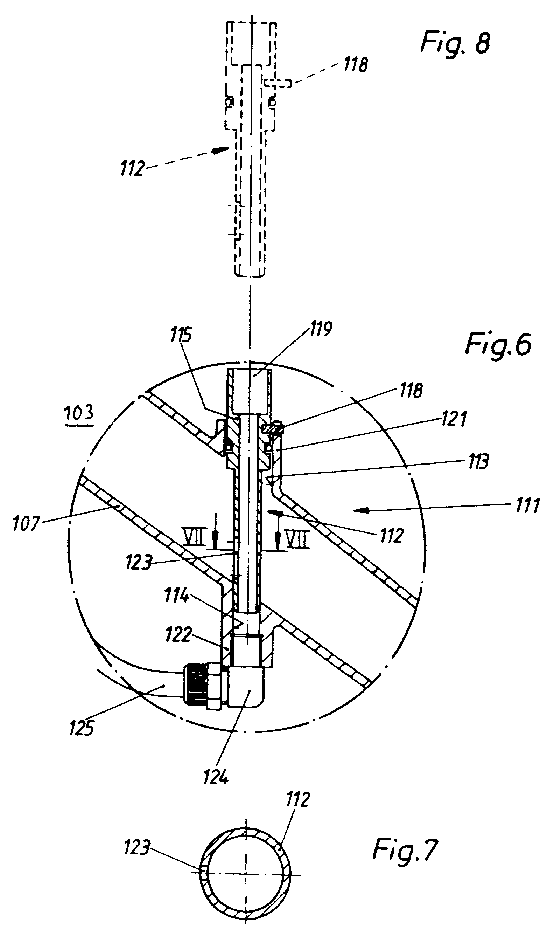

- Fig. 6: die in Fig. 2 mit VI gekennzeichnete Einzelheit in vergrößerter Darstellung;
- Fig. 7: den Schnitt VII-VII in Fig. 6;
- Fig. 8: ein in Fig. 6 dargestelltes Einzelteil des Bearbeitungsgeräts in Einzeldarstellung;
- Fig. 9: den Bearbeitungsraum des Bearbeitungsgeräts mit Blickrichtung auf das Sichtfenster;
- Fig. 10 und 11: eine Klemmvorrichtung für Stulpen oder Handschuhe in ihrer Klemmposition und in ihrer Montagebereitschaftsposition im axialen Schnitt;
- Fig. 12: eine Klemmvorrichtung in abgewandelter Ausgestaltung;
- Fig. 13: eine Strahldüse für Umlaufstrahlung im axialen Schnitt;
- Fig. 14: einen elektro-pneumatischen Steuerungsplan für ein als Bearbeitungsgerät ausgebildetes erfindungsgemäßes Bearbeitungsgerät;

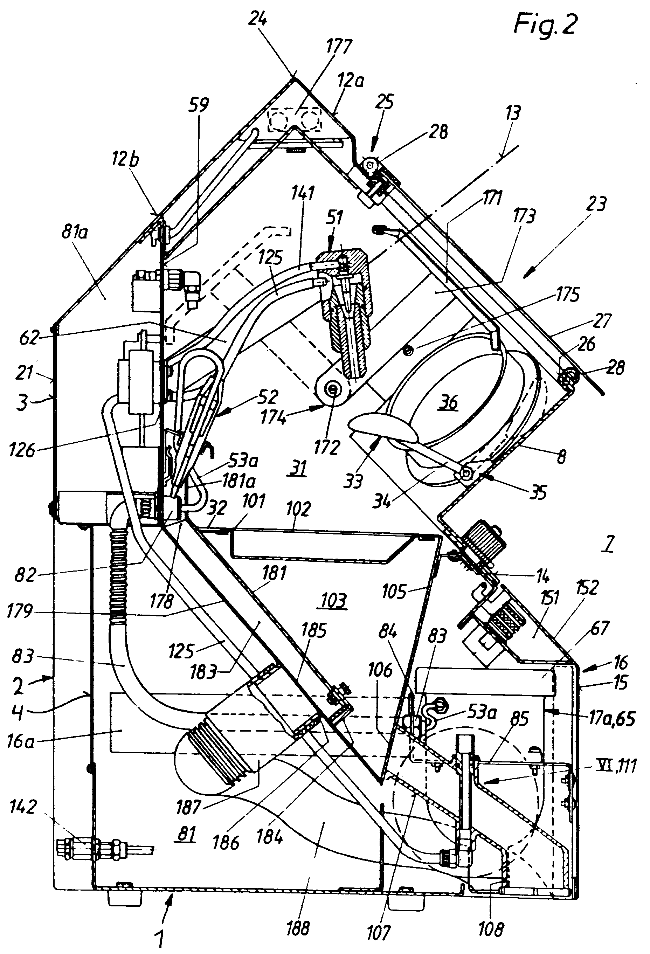

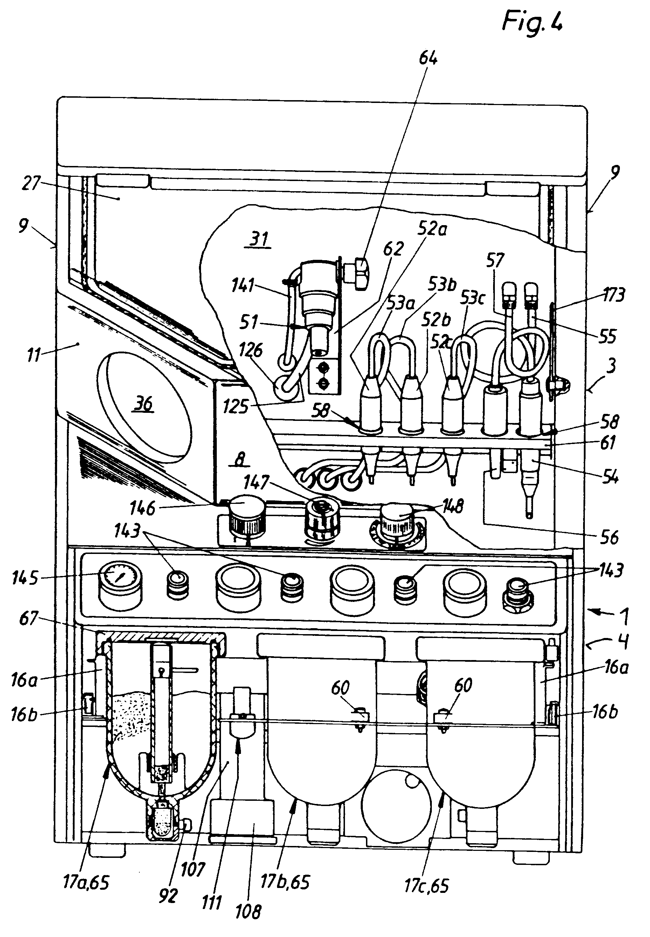

Das Bearbeitungsgerät 1 ist für stehendes Arbeiten konzipiert. Sein Gehäuse 2 ist deshalb so hoch ausgeführt, daß sein Strahlgehäuse 3 sich in einer für stehendes Arbeiten ergonomisch richtigen Arbeitshöhe befindet. Unterhalb des Strahlgehäuses 3 ist das Gehäuse 2 als Untergehäuse 4 und zur Aufnahme der Einzelteile zur Bildung, Zuführung und Abführung des Strahlmittels sowie weiterer Teile des Bearbeitungsgeräts 1 ausgebildet. Das kastenförmige Strahlgehäuse 3 ist zur vorne angeordneten Bedienungsseite 7 hin gekippt angeordnet, so daß gemäß Fig. 2 von der Seite gesehen das obere Ende des Strahlgehäuses 3 dachförmig angeordnet ist und die Vorderwand 8 des Strahlgehäuses 3 sich zur Bedienungsseite 7 hin schräg aufwärts erstreckt. Im vorderen seitlichen Kantenbereich ist das Strahlgehäuse 3 durch sich von der verschmälerten Vorderwand 8 zu den Seitenwänden 9 hin erstreckende Schrägwände 11 stark abgeflacht. Die Vorderwand 8, die Seitenwände 9, die Schrägwände 11 und die vordere und hintere Dachwand 12a,12b des Strahlgehäuses 3 sind parallel zu dessen nach vorne gekippten Kippachse 13 prismenförmig angeordnet. Die schräge Vorderwand 8 bildet mit einer entgegengesetzt schräg verlaufenden Vorderteilwand 14 des Untergehäuses 4 eine vorderseitige Tailierung des Gehäuses 2. Unterhalb der Vorderteilwand 14 befindet sich die vertikale Stirnwand 15 einer Schublade 16, in der parallel zur Bedienungsseite 7 mehrere, insbesondere drei Strahlmittelbehälter 17a,17b,17c angeordnet sind. Die Schublade 16 weist zu beiden Seiten je eine horizontal nach hinten ragende Schubladenschiene 16a auf, die in einer zugehörigen, innen an der Seitenwand 9 befestigte Führungsschiene 16b (Fig. 4) horizontal verschiebbar geführt ist. Die dem Strahlgehäuse 3 und dem Untergehäuse 4 gemeinsamen Seitenwände 9 und die in die hintere Dachwand 12b auslaufende Rückwand 21 sind vertikal angeordnet.

In der vorderen Dachwand 12a befindet sich ein Sichtfenster 23, das sich von einer einen Abstand vom First 24 des Strahlgehäuses 3 aufweisenden Fensteroberkante 25 nach unten und seitlich bis zum Umfang des Strahlgehäuses 3 erstreckt und somit eine sechseckige Form aufweist. Das Sichtfenster 13 ist wahlweise zu öffnen und zu schließen und umfaßt eine Fensteröffnung 26 in der vorderen Dachwand 12a, die durch eine Scheibe 27 aus durchsichtigem Material, insbesondere Glas, außen abgedeckt ist, die im Bereich der Fensteroberkante 25 in seitlichen Gelenken 28 gelagert und somit hoch- und herunterklappbar ist. Zur Abdichtung des Sichtfensters 23 ist am Umfangsrand der Fensteröffnung 26 eine elastische Dichtung 28 angeordnet, auf der die Scheibe 27 mit ihrem Gewicht aufliegt. Unterhalb des hinteren Bereichs des Sichtfensters 23 befindet sich im Bearbeitungsraum 31 oberhalb seines Zwischenbodens 32 ein Auflagerteil 33 für die Hände der Bedienungsperson und/oder für zu behandelnde Werkstücke, das bei der vorliegenden Ausgestaltung mit einer konvex gerundeten Oberseite pilzkopfförmig geformt und am freien Ende eines Tragarms 34 befestigt ist, der so schwenkbar am Strahlgehäuse 3 gelagert ist, daß das Auflagerteil 33 zwischen der in Fig. 2 mit durchgezogenen Linien dargestellten Arbeitsstellung und der mit strichpunktierten Linien dargestellten Bereitsschaftsstellung schwenkbar und in der jeweiligen Endstellung durch Eigengewicht positioniert, so daß eine unbeabsichtigte Verschwenkung nicht erfolgt. In der Bereitschaftsstellung befindet sich das Auflagerteil 33 am Rand des Bearbeitungsraums 31, vorzugsweise vor seinem Totpunkt an der Innenseite der schrägen Vorderwand 8. Die Lagerung 35 für den Tragarm 34 ist vorzugsweise an der Innenseite der Vorderwand 8 angeordnet und wird bei der vorliegenden Ausgestaltung durch eine Steckverbindung gebildet, in die der Tragarm 34 wahlweise handhabungsfreundlich einsteckbar und auch wieder herausziehbar ist, und die eine Schwenkung des Tragarms 34 zwischen den beiden Endstellungen gewährleistet. Zur Begrenzung der Schwenkbewegung nach unten über die Arbeitsstellung hinaus ist ein Anschlag für den Tragarm 34 im Bereich der Lagerung 35 vorgesehen. Bei Nichtgebrauch ist das Auflagerteil 33 somit handhabungsfreundlich nach oben in die Bereitschaftsstellung zu verschwenken, in der es den Arbeitsraum 31 freigibt. Aufgrund der Steckbarkeit läßt sich das Auflagerteil 33 nicht nur leicht montieren bzw. demontieren, sondern es sind vorzugsweise mehrere Auflagerteile 33 unterschiedlicher Form vorhanden, die je nach Werkstückart und/oder -form und/oder -bearbeitungsart habungsfreundlich in die vorhandene Lagerfassung einsetzbar ist.

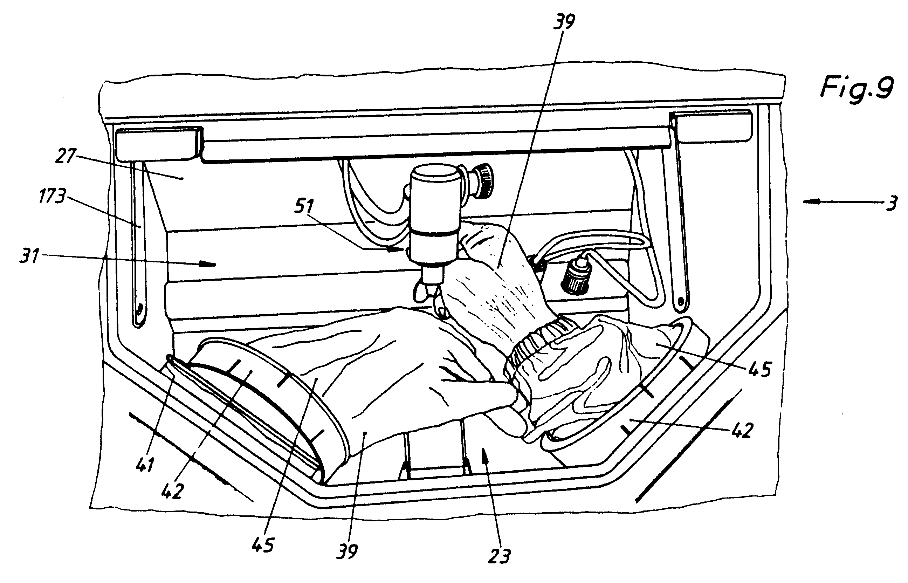

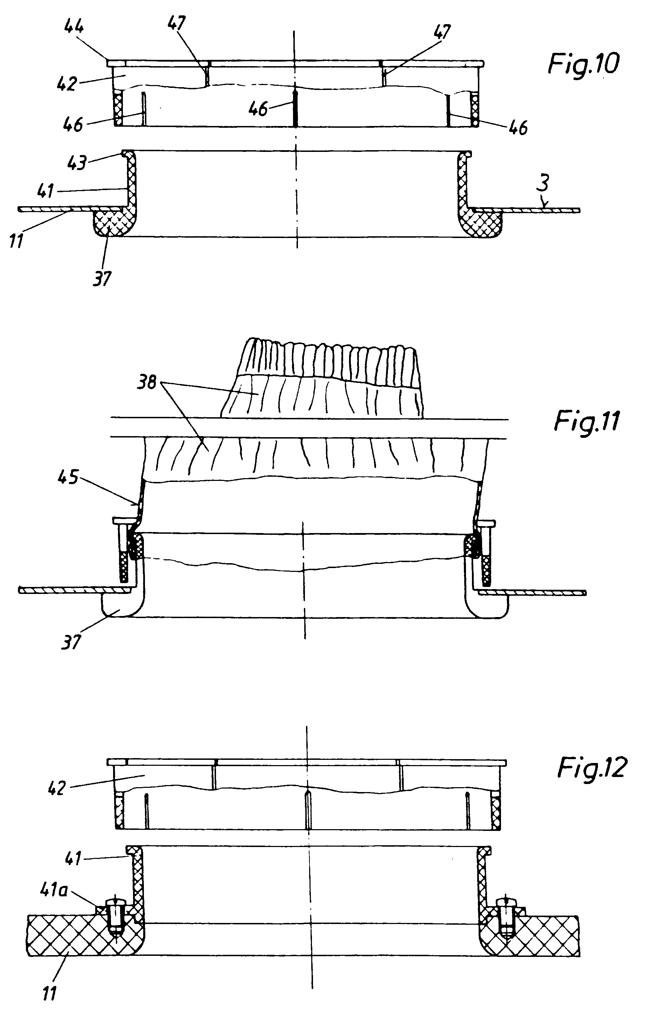

Der manuelle Zugriff zum Bearbeitungsraum 31 ist zum einen durch das geöffnete Sichtfenster 23 und zum anderen durch zwei Durchgrifflöcher 36 gewährleistet, von denen jeweils eines in jeder vorderen Schrägwand 11 handhabungsfreundlich angeordnet ist. Der Rand der Durchgriffslöcher 36 ist mit einem gerundeten Verkleidungsring 37 ausgekleidet. An den Innenrändern der Durchgriffslöcher 36 ist wahlweise jeweils ein Handschuh 39 oder eine Stulpe 38 (s. Fig. 9 bis 12), befestigbar, die zum Schutz der Hände der Bedienungsperson und zur Abdichtung der Durchgriffslöcher 36 dienen. Vorzugsweise ist eine handhabungsfreundlich bedienbare Klemmvorrichtung zur Befestigung vorgesehen, bestehend aus einem vom zugehörigen Durchgriffsloch 36 nach innen vorragenden Rohrstutzen 41, der eine koaxiale Verlängerung des Polsterringes 40 sein kann und ein Klemmring 42, der vom Bearbeitungsraum 31 her auf den Rohrstutzen 41 aufschiebbar ist. Der Rohrstutzen 41 weist an seinem inneren Ende einen kleinen radial abstehenden Klemmwulst 43 auf. Zwecks Verbesserung der Griffestigkeit ist der Klemmring 42 an seinem inneren Ende ebenfalls mit einem kleinen nach außen vorstehenden Wulst 44 versehen. Der Außendurchmesser des Klemmwulstes 43 und der Innendurchmesser des Klemmrings 42 sind so aufeinander abgestimmt, daß der zum Rohrstutzen 41 hin geringfügig konisch divergent ausgestaltete Klemmring 42 nach vorherigem Aufsetzen des freien Manschettenrandes 45 des Handschuhs 39 oder der Stulpe 38 auf den Rohrstutzen 41 von innen auf dem Klemmwulst 43 aufschiebbar und festklemmbar ist. Zur Vergrößerung der Flexibilität und deshalb leichteren Handhabung weist der Klemmring 42 an seinem dem Rohrstutzen 41 zugewandten Ende mehrere auf dem Umfang gleichmäßig verteilt angeordnete Längsschlitze 46 auf. Vorzugsweise sind auch an dem inneren Ende des Klemmrings 42 auf dem Umfang verteilt angeordnete Längsschlitze 47 vorgesehen, die mit den vorgenannten Längsschlitzen 46 überlappend angeordnet sein können und in diesem Fall zu diesen in Umfangsrichtung versetzt angeordnet sind. Der Rohrstutzen 41 bzw. der Polsterring 37 und der Klemmring 42 bestehen vorzugsweise aus Kunststoff. Zum Lösen des Handschuhs 39 oder der Stulpe 38 ist lediglich der Klemmring 42 mit der gegenüberliegenden Hand von innen abzuziehen, wonach auch der Handschuh oder die Stulpe abgezogen werden kann.

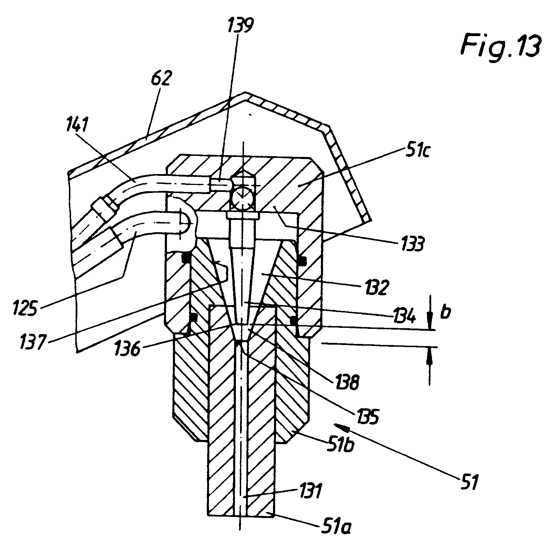

Bei der Ausgestaltung nach Fig. 12 ist der Rohrstutzen 41 mit einem Flansch 41a an der Innenseite des vorhandenen Lochrandes verschraubt.

Das Bearbeitungsgerät 1 ist dazu eingerichtet, mehrere Bearbeitungsarten an den insbesondere dentaltechnischen Werkstücken auszuführen, nämlich Strahlen mit festen Partikeln, Ausbetten und Ausblasen. Zum Strahlen sind wenigstens zwei Strahldüsen 51,52 (Fig. 4) vorgesehen, von denen die eine Strahldüse 51 ortsfest im oberen mittleren Bereich des Behandlungsraums 31 in einem Abstand oberhalb des Auflagerteils 33 angeordnet und vorzugsweise die andere Strahldüse 52 bewegbar angeordnet ist, vorzugsweise durch einen Strahlgriffel gebildet ist, der durch eine flexible Zuführungsleitung 53 an die zugehörige Strahleinrichtung angeschlossen ist. Dabei ist die stationäre Strahldüse 51 in eine Umlaufstrahleinrichtung und die bewegbare Strahldüse 52 an eine Einwegstrahleinrichtung angeschlossen. Vorzugsweise sind drei bewegbare Strahldüsen 52a,52b,52c vorgesehen, die jeweils mit einer eigenen Strahlleitung 53a,53b,53c an einen eigenen Strahlmittelbehälter 17a,17b,17c angeschlossen sind, die mit unterschiedlichem Strahlmittel, z.B. Korund, Aluminiumoxyd (Al₂O₃) oder Glasperlen und dgl. befüllbar sind. Die beweglichen Strahldüsen 52a,52b,52c sind jeweils an eine Einweg-Strahleinrichtung angeschlossen.

Zum Ausbetten ist vorzugsweise ein Meißel 54, insbesondere ein Pneumatikmeißel vorgesehen, der durch eine flexible Versorgungsleitung 55 mit der zugehörigen elektrischen oder pneumatischen Versorgungseinrichtung verbunden ist. Ferner ist eine Luftdüse 56 vorgesehen, die durch eine flexible Luftleitung 57 mit der vorhandenen Drucklufteinrichtung verbunden ist.

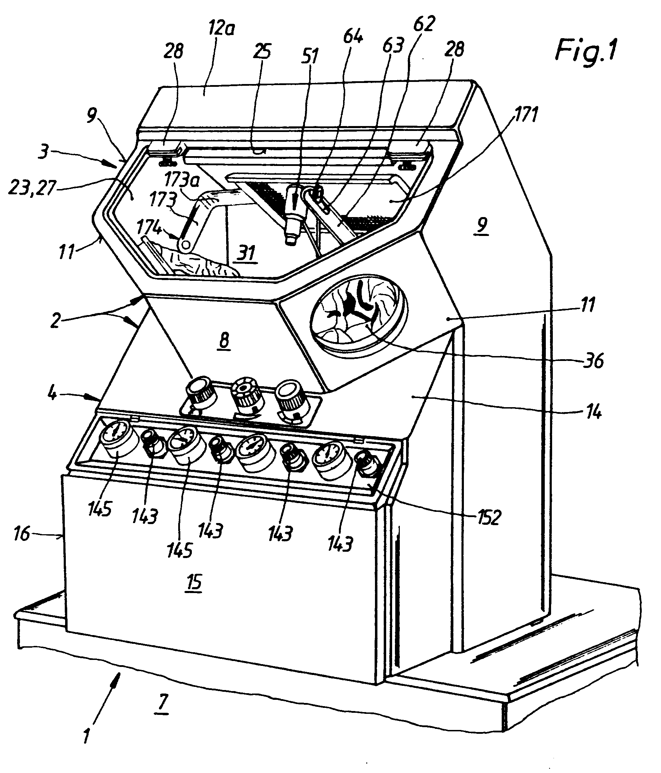

Die beweglichen Strahldüsen 52a,52b,52c, der Meißel 54 und die Luftdüse 56 sind in ihrer jeweiligen Bereitschaftsstellung in eine Steckfassung deponierbar, die durch Stecklöcher 58 in einer horizontalen, an der inneren Rückwand 59 des Behandlungsraums 31 befestigten Steckleiste 61 angeordnet sind. Der Meißel 54 kann in seiner Bereitschaftsstellung alternativ unterhalb des Auflagerteils 33 bzw. im vorderen Bereich des Strahlraums 31, vorzugsweise auf dessen Boden 32, abgelegt werden. Die stationäre Strahldüse 51 ist an einem von der inneren Rückwand 59 schräg nach oben Vorragenden Tragarm 62 befestigt. Vorzugsweise ist auch diese an sich stationäre Strahldüse 51 innerhalb eines gewissen Bewegungsspielraums einstellbar, vorzugsweise nach vorne bzw. hinten verschiebbar und/oder schwenkbar und in der jeweiligen Einstellung feststellbar. Hierzu kann ein in Fig. 1 dargestelltes Langloch 63 und eine es durchfassende und darin verschiebbare Feststellschraube 64 dienen, um deren Achse die Strahldüse 51 in gelöster Position schwenkbar ist.

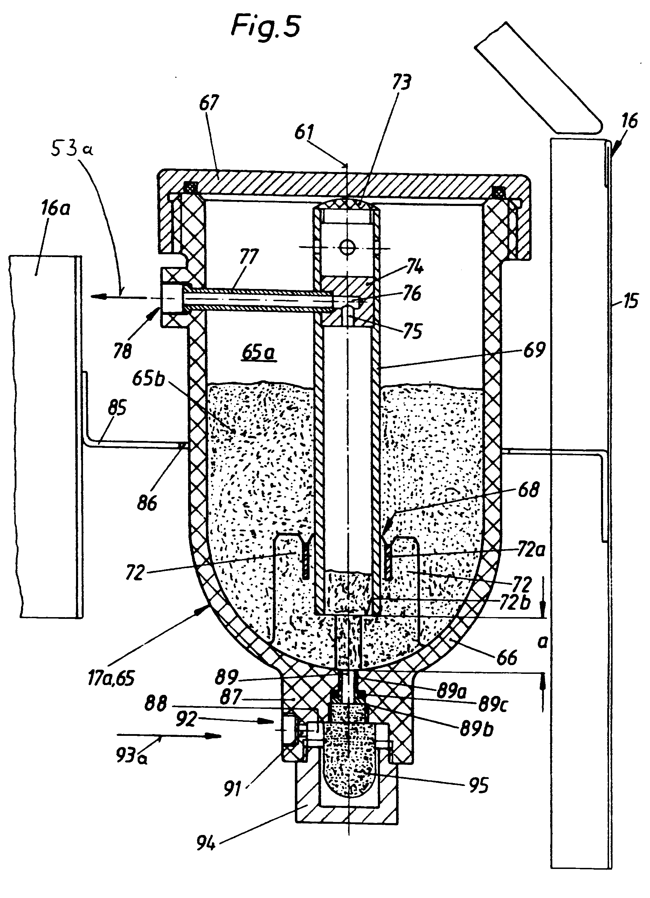

Jeder Strahlmittelbehälter 17a,17b,17c ist durch einen vorzugsweise runden Topf 65 mit einem kugelförmig gerundeten Topfboden 66 und einem Deckel 67 gebildet, der mittels Außengewinde am oberen Rand des Topfes 65 und Innengewinde an einem zylindrischen Gewindestutzen des Deckels 67 auf den Topf 65 aufschraubbar und abgedichtet ist (Fig. 2 bis 5). Es kann auch ein Bajonettverschluß für den Deckel 67 vorgesehen sein.

Im zentralen Grundbereich des Topfbodens 66 ist eine Steckfassung 68 für ein von oben einsteckbares Steigrohr 69 vorgesehen, die durch mehrere, z.B. drei um die vertikale Mittelachse 61 des Topfes 65 verteilt angeordnete vertikale Stege 72 gebildet sein kann, die an den vorzugsweise aus Kunststoff bestehenden Topf 65 einstückig angeformt sind. Das Steigrohr 69 erstreckt sich bis zum Deckel 67 und kann oben durch einen Stopfen 73 verschlossen sein. In einem Abstand unterhalb des oberen Endes sitzt im Steigrohr 69 ein Durchführungsstopfen 74, der in seinem unteren Bereich einen axialen Kanal 75 aufweist, von dem ein radialer Kanal 76 seitlich abzweigt, in den ein radiales Verbindungsrohr 77 dicht eingesetzt ist, das an seinem äußeren Ende mit einem in die Wandung des Topfes 65 eingeschraubten Anschlußstutzen 78 dicht verbunden ist. An den Anschlußstutzen 78 ist die zugehörige flexible Strahlleitung 53a,53b,53c angeschlossen. Die Strahlleitungen 53a,53b,53c erstrecken sich im Hohlraum 81 des Untergehäuses 4 nach hinten und oben in einen hinter dem Behandlungsraum 31 angeordneten Hohlraumteil 81a, der zwischen der äußeren und der inneren Rückwand 21 und 59 angeordnet ist. Hier durchfassen sie jeweils die innere Rückwand 59 in einer Durchführungsverschraubung 82 (Fig. 2), und sie erstrecken sich im Behandlungsraum 31 weiter zur zugehörigen beweglichen Strahldüse 52a,52b,52c. Im Untergehäuse 4 erstrecken sich die Strahlleitungen 53a,53b,53c in einer flexiblen Schatzrohrleitung 83, die an die Durchführungsverschraubung 82 angeschlossen ist und sich in Richtung auf den zugehörigen Strahlmittelbehälter 17a,17b,17c entweder bis zu dessen Anschlußstutzen 78 oder bis zu einer weiteren Verschraubung 83 erstreckt, die einen vorzugsweise vertikalen Steg 84 durchfaßt, der Teil einer horizontalen Tragschiene 85 ist, in der die Strahlmittelbehälter 17a,17b,17c in einer sich parallel zur Bedienungsseite 7 erstreckenden Reihe jeweils in einem Loch 86 von oben eingesetzt sind und mittels angeformten Schraubansätzen 60 anschraubbar sind. Die Tragschiene 85 kann vorzugsweise ein Z-förmiges Profil sein, und sie ist insbesondere innen an der Stirnwand 15 der Schublade 16 befestigt.

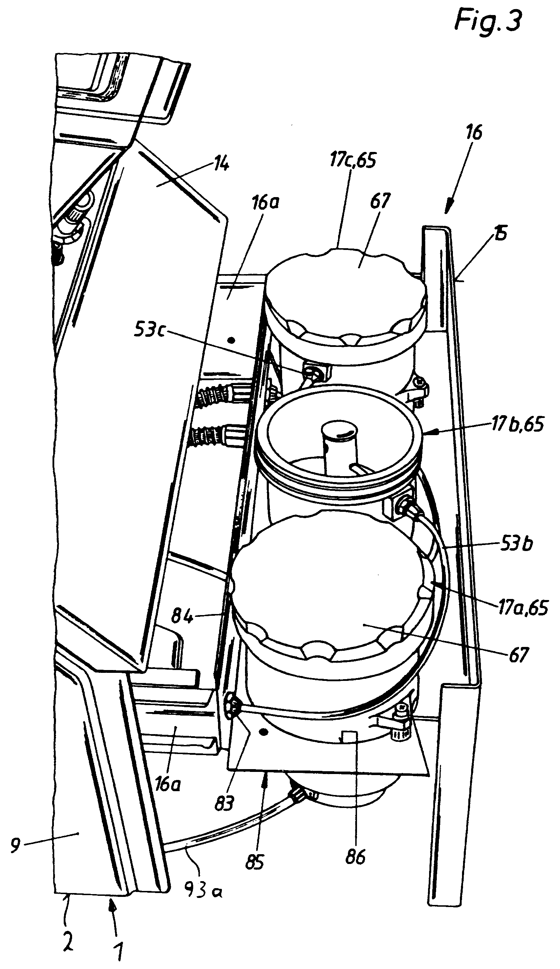

Vorzugsweise sind die beiden seitlichen Schubladenschienen 16a am Steg 84 der Tragschiene 85 befestigt. Die Aufnahme der Strahlleitungen 53a,53b,53c als Schlauch in der zugehörigen flexiblen Schutzrohrleitung 83 ist aus mehreren bedeutenden Gründen vorteilhaft. Die Strahlleitungen 53a,53b,53c können leicht und schnell ausgetauscht werden, da sie leicht und schnell aus der zugehörigen Schutzrohrleitung 83 herausgezogen werden können und die neuen Strahlleitungen durch die Schutzrohrleitung 83 hindurchgeführt werden kann, was entweder vom Behandlungsraum 31 oder von der geöffneten Schublade 16 her problemlos erfolgen werden kann. Mit einem öfteren Austausch der Strahlleitungen 53a,53b,53c ist zu rechnen, weil diese naturgemäß einem Verschleiß unterliegen. Aufgrund der Flexibilität der Strahlleitungen 53a,53b,53c und der Schutzrohrleitungen 83 ist auch die Beweglichkeit der Schublade 16 gewährleistet, in der die Strahlmittelbehälter 17a,17b,17c zwischen einer Beschickungsposition vor dem Untergehäuse 4 (s. Fig. 3) und einer in das Untergehäuse 4 eingeschobenen Position verschiebbar sind. Ferner bilden die Schutzrohrleitungen auch einen Schutz und schützen das Untergehäuse vor Verunreinigungen beim Bersten einer Strahlleitung.

An der Unterseite jedes Strahlmittelbehälters 17a,17b,17c ist zentral ein Materialansatz 87 angeformt, in den von unten ein Sackloch 88 eingearbeitet ist, von dem sich koaxial nach oben ein Kanal 89 in den Innenraum 65a des zugehörigen Topfes 65 zentral zwischen die Stege 72 erstreckt. Vom Sackloch 88 erstreckt sich radial ein Kanal 91, an den eine in den Materialansatz 87 schraubbare Verschraubung 92 anschließbar ist, die mit einer Zuführungsleitung 93a,93b,93c für Druckluft verschraubt ist. Das Sackloch 88 ist durch einen topfförmigen Schraubdeckel 94 verschließbar. Im Sackloch 88 ist ein Luftfilter 95a,95b,95c angeordnet, das mit einem Filterfuß in den Topfboden 66 eingeschraubt sein kann und einen Luftdurchgang zwischen den Kanälen 91 und 89 gewährleistet. Die Stege 72 sind im Bereich ihrer oberen Enden durch einen Ringbund 72a stabilisiert, der mit ihnen und dem Topf 65 einstückig spritzgegossen oder in Stegschlitze eingesteckt sein kann. Die Stege 72 sind mit ihren Innenlängskanten in einem Abstand von der Mittelachse 61 des Topfes 65 angeordnet und in einem vertikalen Abstand a vom Behälterboden 66 zur Bildung einer Auflagerschulter 72b für das Stützrohr 69 entsprechend dessen Durchmesser ausgespart. Der Kanal 89 befindet sich in einer Hülse 89a mit einem Flansch 89b an ihrem unteren Ende, der mittels eines O-Rings 89c an einer Innenschulter abgedichtet und nach oben abgestützt ist. Die Hülse 89a wird von unten in ein entsprechendes Loch im Behälterboden 66 eingesetzt. In den Strahlmittelbehältern 17a,17b,17c, die jeweils ein wesentliches Funktionsteil der zugehörigen Einweg-Strahleinrichtung sind, wird das zum Strahlen benötigte Luft/Strahlmittel/Gemisch gebildet, was weiter unten noch beschrieben wird.

Zur Wartung der zum Befüllen der Strahlmittelbehälter 17a,17b,17c wird die Schublade 16 nach vorne herausgezogen, wodurch die Strahlmittelbehälter in eine Position außerhalb des Untergehäuses 4 mitbewegt werden, in der sie gut zugänglich sind (Fig. 3). Danach wird die Schublade 16 mit den Strahlmittelbehältern 17a,17b,17c wieder in das Untergehäuse 4 eingeschoben.

Im Zwischenboden 32 ist ein Loch 101 vorgesehen, in dem ein Sieb 102 angeordnet ist, das strahlmitteldurchlässig ist und mit dem Strahlmittel verkleinerte Werkstückteile zurückhält. Unter den Zwischenboden 32 ist ein nach unten pyramidenförmig konvergenter Sammelkasten 103 angeordnet. Die Form des Sammelkastens 103 ist derart unsymmetrisch, daß seine nach unten weisende Spitze - von der Bedienungsseite 7 her gesehen - sich zwischen zwei Strahlmittelbehältern, hier den Strahlmittelbehältern 17a,17b befindet. Im Bereich der Spitze ist in der Vorderwand 105 des Sammelkastens 103 ein viereckiges Auslaßloch 106 vorgesehen, an das ein sich schräg nach unten und vorne erstreckendes Auslaßrohr 107 entsprechend viereckigen Querschnitts mittels einer Dichtung dicht angeschraubt ist. Das Auslaßrohr 107 erstreckt sich schräg nach unten zwischen den Strahlmittelbehältern 17a,17b und ist in deren Bereich in Form eines runden Anschlußstutzens 108 vertikal nach unten abgewinkelt. An diesen Anschlußstutzen 108 ist mittels einer Gewindeverschraubung oder eines Bajonettverschlusses eine nicht dargestellte Abführungsleitung für benutztes Strahlmittel anschließbar.

Die die stationäre Strahldüse 51 aufweisende Umlauf-Strahleinrichtung verwendet benutztes Strahlmittel aus dem Sammelkasten 103. Hierzu ist ihr eine Strahlmittel-Rückführungsvorrichtung 111 zugeordnet, die an das Auslaßrohr 107 angeschlossen ist und ein im Querschnitt vorzugsweise rundes Aufnahmerohr 112 aufweist, daß das Auslaßrohr 107 quer, vorzugsweise senkrecht in Querbohrungen 113,114 durchfaßt. Das Aufnahmerohr 112 weist an seinem oberen Ende eine zylindrische Verdickung 115 auf, in deren Mantelfläche eine Ringnut angeordnet ist, in der sich ein elastischer Dichtungsring befindet. Oberhalb der Ringnut ist in einem Querloch ein Arretierstift 118 eingepreßt, der die Mantelfläche der Verdickung 115 überragt. Der Innenquerschnitt des Aufnahmerohrs 112 ist an seinem oberen Ende erweitert. In diese erweiterte Ausnehmung 119 kann ggfls. ein Filter eingesetzt werden. Zur Stabilisierung der Lagerung für das Aufnahmerohr 112 sind die Querbohrungen 113,114 in an die Wandung des Auslaßrohrs 107 angeformten Stutzen 121,122 angeordnet. Am oberen Ende des oberen Stutzens 121 ist ein Schlitz vorgesehen, der den Arretierstift 118 aufnimmt. Hierdurch ist das Aufnahmerohr 112 gegen Drehen und weitere Verschiebung nach unten lagegesichert. Im Bereich des freien Querschnitts des Auslaßrohrs 107 ist auf der dem Sammelkasten 103 zugewandten Seite des Aufnahmerohrs 112 wenigstens eine Öffnung 123 vorzugsweise in Form eines sich vertikal erstreckenden Schlitzes vorgesehen, die unten in etwa mit der unteren Innenwand des Auslaßrohrs 107 abschließt, und durch die benutztes Strahlmittel aus dem Auslaßrohr 107 in das Aufnahmerohr 112 gelangen kann. In den unteren Stutzen 122 ist vorzugsweise koaxial eine Anschlußarmatur 124 eingeschraubt, an die eine Rohrleitung 125 angeschlossen ist, die mit der stationären Strahldüse 51 verbunden ist. Die Rohrleitung 125 erstreckt sich durch die Hohlräume 81,81a und durchfaßt eine Durchführungsverschraubung 126 in der inneren Rückwand 59. Vorzugsweise besteht die Rohrleitung 125 aus flexiblem Material in Form eines Schlauches, und sie kann in den Hohlräumen 81,81a von einer Schutzrohrleitung umgeben sein, die sich zwischen der Anschlußarmatur 124 und der Durchführungsverschraubung 126 erstrecken kann. Wie bereits bei den Strahlleitungen 53a,53b,53c ist auch hierdurch ein schneller und handhabungsfreundlicher Austausch der Rohrleitung 125 gewährleistet.

Die stationäre Strahldüse 51 weist gemäß Fig. 13 einen axialen Düsenkanal 131 auf, der von einem zur Düsenspitze hin vorzugsweise kegelförmig konvergenten Injektionsraum 132 ausgeht. Im der Düse abgewandten Endbereich des Injektionsraums 132 ist die Rohrleitung 125 radial mittels eines Leitungsanschlusses dicht angeschlossen. In einer den Injektionsraum 132 auf der der Düsenspitze abgewandten Seite begrenzenden Querwand 133 der Strahldüse 51 ist koaxial zum Düsenkanal 131 und zum Injektionsraum 132 eine rohrförmige Innendüse 134 mit einem Fuß in einem Aufnahmeloch fest eingesetzt, die sich bis kurz vor das vordere Ende des konvergenten Injektionsraums 132 erstreckt und vom Eingangsloch 135 des Düsenkanals 131 einen Abstand b von einigen Millimetern aufweist. Dabei ist zwischen dem sich vorzugsweise kegelförmig verjüngenden vorderen Ende 136 der Innendüse 134 und der konvergenten Innenmantelfläche 137 des Injektionsraums 132 ein kleiner Ringspalt 138 vorhanden. Die Innendüse 134 ist mit einem Zuführungskanal in der Querwand 133 verbunden, an den mittels eines ggfls. radialen Verbindungskanals 139 eine vorzugsweise flexible Druckluft-Zuführungsleitung 141 angeschlossen ist, die z.B. vom Hohlraum 81a ausgeht und die innere Rückwand 59 in einer Durchführungsverschraubung durchsetzt und an die vorhandene Druckluft-Zuführungsversorgung angeschlossen ist, von der lediglich der im unteren Bereich der Rückwand 21 angeordnete Eingangsanschluß 142 (in Fig. 2) andeutungsweise dargestellt ist. Vorzugsweise ist der Düsenkanal 131 in einem zylindrischen Düsenrohr 51a angeordnet, das von vorne in einen Düseneinsatz 51b fest eingesetzt ist. Das Düsenrohr 51a überlappt das vordere Ende 136 der Innendüse 134 mit einem konischen Kanalabschnitt, der den vorderen Teil des Injektionsraums 132 bildet. Der Düseneinsatz 51b ist von vorn in einen Düsenhaltekörper 51c vorzugsweise axial verstellbar eingesetzt arretiert und abgedichtet, wobei zwischen der Querwand 133 und dem Düseneinsatz 51b ein Abstand vorgesehen ist.

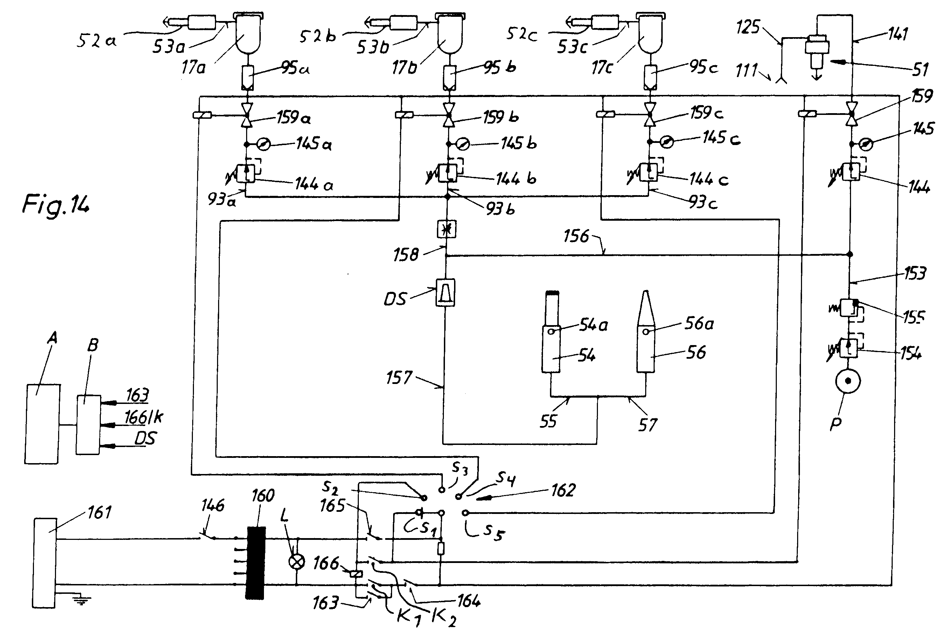

Zur Steuerung des Bearbeitungsgeräts 1 sind vier Einstellglieder 143 (Fig. 4) in Form von Drehknöpfen vorgesehen, mit denen über nur in Fig. 14 dargestellte Druckregler 144 der Luftdruck in jeder der vier vorhandenen Strahleinrichtungen in einem gewissen Einstellbereich einstellbar ist. Der jeweilige Druck wird durch vier Manometer 145 angezeigt, die an die zugehörigen Druckluftleitungsabschnitte angeschlossen sind. Außerdem sind drei weitere Einstellglieder 146,147,148 vorgesehen, deren Funktion noch beschrieben wird. Die Einstellglieder 143 und die Manometer 145 sind vorzugsweise in einer unteren und die Einstellglieder 146,147,148 in einer oberen horizontalen Reihe auf der schrägen Vorderteilwand 14 angeordnet, wobei vorzugsweise die untere Reihe in einer horizontalen muldenförmigen Vertiefung 151 angeordnet ist, die durch einen Klappdeckel 152 verschließbar ist.

Im folgenden wird die Steuerung und Funktion des Bearbeitungsgeräts 1 anhand des Steuerplans gemäß Fig. 14 beschrieben. Die von einer geräteexternen oder geräteinternen Druckquelle P erzeugte Druckluft steht in einer Eingangsrohrleitung 153 an, in der ein durch das Einstellglied 147 einstellbarer Druckregler 154 und ein Sicherheitsventil 155 in Strömungsrichtung hintereinander angeordnet sind. Die Eingangsrohrleitung 153 Verzweigt in die Zuführungsleitung 141, die zur stationären Strahldüse 51 führt, und eine Zweigleitung 156, die in zwei weitere Zweigleitungen 157,158 verzweigt. In der Zuführungsleitung 141 sind in Strömungsrichtung eines der bereits beschriebenen Druckregler 144, das zugehörige Manometer 145 und ein elektromagnetisches Absperrventil 159 angeordnet. In der Zweigleitung 157 ist ein Durchflußsensor DS angeordnet. Die beiden flexiblen Versorgungsleitungen 55 und 57 für den Meißel 54 und die Luftdüse 56 zweigen von der Zweigleitung 157 ab. Die Zweigleitung 158, in der eine vorzugsweise verstellbare Drossel angeordnet ist, verzweigt in die drei Zuführungsleitungen 93a,93b,93c, die an die zugehörigen Strahlmittelbehälter 17a,17b,17c angeschlossen sind und in denen jeweils ein durch das zugehörige Einstellglied 143 beaufschlagbarer Druckregler 144a,144b,144c, das zugehörige Manometer 145a,145b,145c, ein zugehöriges elektromagnetisches Absperrventil 159a,159b,159c und das zugehörige Luftfilter 95a,95b,95c in Strömungsrichtung hintereinander angeordnet sind. Der Meißel 54 und die Luftdüse 56 weisen jeweils ein manuell betätigbares Schaltglied 54a,56a zu ihrer Ein- und Ausschaltung auf.

Im folgenden wird die Funktion anhand des elektrischen Schaltkreises der vorhandenen Steuereinrichtung beschrieben.

Die Primärseite eines Netztransformators 160 ist über einen Hauptschalter 146a mit dem Netz 161 verbunden. An den beiden Ausgangsanschlüssen der Sekundärseite des Netztransformators 160 liegt eine Kontrollampe L, die leuchtet, wenn der Hauptschalter 146a geschlossen ist.

An den Ausgang des Netztransformators 160 sind ferner ein Halterelais 166 mit Selbsthaltekontakten K₁ und K₂, ein Fußschalter 163, zwei Schalter 164 und 165 und ein durch das Einstellglied 148 steuerbarer Um- bzw. Wählschalter 162 angeschlossen. Der Schalter 164 wird geschlossen, wenn die Schublade 16 eingeschoben wird. Der Schalter 165 wird geschlossen, wenn das Sichtfenster 23 geschlossen wird.

Die Verbindung der vorstehend erwähnten elektrischen Elemente kann der Fig. 14 entnommen werden und soll nicht im einzelnen erläutert werden. Erläutert werden soll lediglich die Funktion.

Es sei zunächst davon ausgegangen, daß der Wählschalter 162 sich in der Schaltstellung S₁ befindet. Wenn der Hauptschalter 146a und der Fußschalter 143 geschlossen werden, so wird das Magnetventil 159 für die Strahldüse 51 geöffnet, wodurch die Strahldüse 51 in Betrieb gesetzt wird solange der Fußschalter 143 geschlossen bleibt.

Wenn bei geschlossenem Hauptschalter 146a der Wählschalter 162 in die Schaltposition S₂ gesetzt wird, so wird der Relaismagnet 166 unter Strom gesetzt, und die Selbsthaltekontakte K₁,K₂ werden geschlossen. Dadurch wird das Magnetventil 159 geöffnet und die Strahldüse 51 in Dauerbetrieb gesetzt.

Wenn bei geschlossenem Hauptschalter 146a der Wählschalter 162 in die Schaltposition S₃ umgeschaltet wird, so wird mit dem Schließen des Fußschalters 163 das Magnetventil 159a für die Strahldüse 52a geöffnet. Wenn der Fußschalter 163 wieder freigegeben wird, so wird das Magnetventil 159a für die Strahldüse 52a wieder geschlossen.

In der Schaltstellung S₄ des Wählschalters 162 wird bei geschlossenem Hauptschalter 146a das Magnetventil 159b geöffnet und somit die Strahldüse 52b in Betrieb gesetzt.

In der Schaltstellung S₅ des Wählschalters 162 wird bei geschlossenem Hauptschalter 146a und geschlossenem Fußschalter 163 das Magnetventil 159c geöffnet und die Strahldüse 52c in Betrieb gesetzt.

Bei geschlossener Schublade 16 sowie geschlossenem Sichtfenster 23 kann somit die durch den Wählschalter 162 voreingestellte Strahleinrichtung durch Betätigen des Fußschalters 163 in Betrieb genommen werden.

Das Bearbeitungsgerät 1 eignet sich zur Oberflächenbehandlung von feinwerktechnischen Werkstücken verschiedenster Art, insbesondere der Schmuckindustrie, Archäologie, des allgemeinen Maschinenbaus und insbesondere der Dentaltechnik. Dabei eignet sich das Bearbeitungsgerät 1 nicht nur zum Strahlen mittels körnigem Strahlmittel sondern auch zum Ausbetten und/oder Ausblasen des Werkstücks bzw. der Behandlungsstelle. Durch Strahlen lassen sich Oberflächen reinigen, Oberflächenkonditionierungen zur Oberflächenvergrößerung und Haftungssteigerung einer Beschichtung vornehmen, was insbesondere bei dentaltechnischen Werkstücken von Bedeutung ist, und insbesondere beim Herstellen von detaltechnischen Modellgußteilen Einbettmassereste entfernen. Zum Strahlen kann sowohl die im wesentlichen ortsfeste Strahldüse 51 oder eine der ortsungebundenen Strahldüsen 52a,52b,52c bzw. Strahlgriffel eingesetzt werden, wobei das gewünschte Strahlmittel oder die gewünschte Körnung ausgewählt werden kann. Dabei kann Umlaufstrahlung oder Einwegstrahlung gewählt werden.

Mit den ortsungebundenen Strahldüsen läßt sich am vorhandenen Werkstück ganz gezielt arbeiten. Eine wesentliche Forderung für dentaltechnische Kronen besteht z.B. darin, daß die Innenkante des Kronenrandes scharfkantig sein soll, um nach dem Aufsetzen der Krone am Kronenrand einen dichten Abschluß zu haben und den Zutritt von Bakterien zu verhindern. Dies läßt sich insbesondere durch gezieltes Strahlen mittels beweglichen Strahldüsen erreichen. Insbesondere bei dentaltechnischen Gußstücken kann das Gußstück vor dem Strahlen im Bearbeitungsgerät ausgebettet werden, wozu elektrisch oder pneumatisch antreibbare Ausbettwerkzeuge vorzusehen sind, beim vorliegenden Ausführungsbeispiel der Pneumatikmeißel 54. Je nach Zustand des ausgebetteten Gußstücks können anschließend Einbettmassereste durch Strahlung entfernt werden und es kann die Bearbeitungsstelle oder es kann grundsätzlich aus- oder abgeblasen werden.

Bei Einschaltung der Umlaufstrahleinrichtung mit der Strahldüse 51 strömt Druckluft durch die Zuführungsleitung 141 und die Innendüse 134 und injiziert im Bereich des Ringspalts 138 eine Saugluftströmung in der Rohrleitung 125. Aufgrund dieser Saugluftströmung wird im Auslaßrohr 107 vorhandenes Strahlmittel durch den Schlitz 123 eingesaugt und durch die Saugluftströmung vor die Spitze der Innendüse 134 transportiert, wo sich die Druckluft, die Saugluft und das Strahlmittel miteinander vermischen und als Druckluftströmung durch die Strahldüse 51 austreten. Die Strahldüse 51 funktioniert dabei als Injektorsystem. Physikalisch bedingt können dabei Schwankungen in der Druckluftströmung auftreten, so daß sich eine intermitierende (pumpende) Strahlwirkung einstellen kann. Es ist festgestellt worden, daß durch die Fehlluftansaugung am hintern Ende des Aufnahmerohrs 112 eine gleichmäßige Luftströmung und daraus resultierend eine gleichmäßige Strahlwirkung erreicht wird. Die gleichmäßige Luftströmung führt auch zu einer vergleichmäßigten Fluidisierung des in den Schlitz 123 eingesaugten Strahlmittels, was zur vergleichmäßigten Strahlwirkung beiträgt. Bei der Umlaufstrahlung wird ein Strahlmittel benutzt, dessen Zusammensetzung von der vorherigen Strahlbehandlung abhängig ist, da das bei einer vorherigen Strahlbehandlung benutzte Strahlmittel sich im Sammelkasten 103 sammelt und somit ein Strahlmittelgemisch umfassen kann.

Bei Einschaltung einer Einwegstrahlung, die beim vorliegenden Ausführungsbeispiel mit drei verschiedenen Strahlmittelarten ausgeführt werden kann, wird jeweils unbenutztes Strahlmittel zur Strahldüse 52a,52b,52c geführt. Dabei wird jeweils die gewählte Druckluft-Zuführungsleitung 93a,93b,93c durch Öffnen des zugehörigen Absperrventils 159a,159b,159c in Funktion gesetzt. Durch den aus dem Kanal 89 nach oben in den Hohlraum 65a des zugehörigen Strahlmittelbehälters 17a,17b,17c einströmenden Druckluftstrom wird das darin befindliche Strahlmittel 65b oberhalb des Topfbodens 66 und im Steigrohr 69 fluidisiert und nach oben mitgerissen, wobei dieses Druckluft-Strahlmittel-Gemisch durch die Strahlleitungen 53a,53b,53c zur zugehörigen Strahldüse 52a,52b,52c geführt wird. Es hat sich gezeigt, daß diese Fluidisierung unabhängig ist von der Füllhöhe des Strahlmittels im Strahlmittelbehälter. Hierdurch läßt sich ein von der Füllhöhe unabhängiger gleichmäßiger Druckluft-StrahlmittelGemischstrom erzeugen.

Das Strahlen wird je nach Art des Strahlmittels und seiner Körnung bei Luftdrücken zwischen 1,5 und 6 bar durchgeführt.

Das Ausbetten, Ausblasen und/oder Strahlen der Werkstücke erfolgt mit den durch die Durchgrifflöcher 36 in den Behandlungsraum 31 eingesteckten Hände der Bedienungsperson. Das Auflagerteil 33 erweist sich dabei als vorteilhafte Stützauflage für die Hände und/oder das Werkstuck, so daß durch Handunruhe hervorgerufene Fehlbehandlungen des Werkstücks ausgeschaltet werden können.

Insbesondere bei intensiver Strahlung wie beim Umlaufstrahlen, bei dem mit höheren Drücken und größerem Strahlmitteldurchsatz gearbeitet wird, ist eine Beaufschlagung der Sichtfensterscheibe 27 kaum zu vermeiden. Eine Beaufschlagung der Scheibe 27 ist unerwünscht, weil das Glas innenseitig abnutzt und stumpf sowie undurchsichtig wird. Vorzugsweise ist deshalb die Scheibe 27 mit einer innenseitigen durchsichtigen Beschichtung aus verschleißfestem Material versehen. Diese Beschichtung ist auch aus Unfallverhütungsgründen vorteilhaft, weil bei einem Scheibenbruch die Bechichtung die Bruchstücke der Scheibe zusammenhält.

Außerdem ist zum Schutz der Scheibe 27 innen ein Schutzsieb 171 aus Metall oder Kunststoff vorgesehen, das zwischen einer nahe vor der Scheibe 27 angeordneten Arbeitsstellung (in Fig. 2 mit durchgezogenen Linien dargestellt) und einer das Sichtfenster 23 freigebenden Bereitschaftsstellung (in Fig. 2 strichpunktiert angedeutet) verschwenkbar. In der jeweiligen Schwenkendstellung ist das Schutzsieb 171 durch Anschläge positioniert, gegen die es aufgrund seiner Schwerkraft anliegt. Eine selbsttätige Verstellung ist deshalb ausgeschlossen. Die Schwenkachse 172 des Schutzsiebes 171 erstreckt sich vorzugsweise parallel zur Bedienungsseite 7 etwa horizontal im mittleren Bereich des Behandlungsraums 31, so daß das Schutzsieb 171 aus seiner im vorderen Bereich des Behandlungsraums 31 oben befindlichen Arbeitsstellung in eine im hinteren Bereich des Behandlungsraums 31 oben befindliche Bereitschaftsstellung schwenkbar ist. Das Schutzsieb 171 ist an seitlichen Tragschenkeln 173 befestigt, die sich innenseitig in der Nähe der Seitenwände 9 des Strahlgehäuss 3 jeweils zu einem im Bereich der Schwenkachse 172 angeordneten, an der zugehörigen Seitenwand 9 befestigten Schwenklager 174 erstrecken und darin schwenkbar gelagert sind. Die vorzugsweise aus flachen, parallel zu den Seitenwänden 9 angeordneten Tragschenkel 173 können mit oberen Schenkelarmen 173 (Fig. 1) winkelförmig ausgestaltet sein, wenn das Schutzsieb 171 wesentlich schmaler bemessen ist, als die Breite des Behandlungsraums 31. Das Schutzsieb 171 ist mittig zur stationären Strahldüse 51 und vorzugsweise auch mittig zum Behandlungsraum 31 angeordnet. Vorzugsweise sind die Schwenklager 174 durch Lagerzapfen und zugehörige Lagerbohrungen ausgebildet, die an den Tragschenkeln 173 oder an den Seitenwänden 9 angeordnet sein können. Vorzugsweise stehen die Tragschenkel 173 in ihrer Lagerposition unter einer nach außen gerichteten Spannung, wobei sie elastisch einbiegbar sind, um sie aus den Schwenklagern 174 handhabungsfreundlich und einfach zu lösen bzw. wieder einzuführen. Auf diese Weise ist eine einfache und schnelle Montage bzw. Demontage und ein handhabungsfreundlicher Austausch des Schutzsiebes 171 bei Verschleiß möglich. Zur Positionierung in der Arbeitsstellung kann an wenigstens einer Seitenwand 9 ein Anschlagstück 175 vorgesehen sein, gegen das die Tragschenkel 173 in der zugehörigen Schrägstellung des Schutzsiebes 171 unter Eigengewicht anliegt. In der Bereitschaftsstellung, in die das Schutzsieb 171 über die stationäre Strahldüse 51 und deren Tragarm (62) geschwenkt wird, kann das Schutzsieb 171 durch die Rückwand 79 des Behandlungsraums 31 oder den Tragarm 62 als Anschlag begrenzt sein.

Das Gehäuse 2 bzw. das Strahlgehäuse 3 und das Untergehäuse 4 können aus Kunststoff bestehen und vorzugsweise geschäumt sein, z.B. aus Polyurethan (PU), oder aus Metall, insbesondere Stahlblech bestehen. Zur Beleuchtung des Arbeitsraumes 31 ist im Firstbereich innen eine oder zwei Röhrenlampen 177 aufweisende Beleuchtung vorgesehen.

Im Betrieb des Bearbeitungsgeräts 1 wird bei Benutzung der Strahleinrichtungen, des Pneumatikmeißels 54 und der Luftdüse 56 fortwährend Druckluft in den Behandlungsraum 31 eingeführt, wobei bei der Behandlung des Werkstücks je nach dessen Material, z.B. Quarz, gesundheitsgefährdende Teilchen bzw. Stäube in den Behandlungsraum 31 gelangen. Deshalb ist dem Bearbeitungsraum 31 eine Absaugöffnung zugeordnet, durch die hindurch der Behandlungsraum 31 mittels einer Absaugvorrichtung A (nur in Fig. 14 angedeutet) abgesaugt werden kann, deren elektrische Ein- bzw. Abschaltung mit der Funktion des Fußschalters 163, des Halterelais 166 und des eine Schaltfunktion ausführenden Durchflußsensors DS mittels eines Oder- gliedes B automatisch erfolgt, d.h. in Abhängigkeit von der Funktion der Strahleinrichtungen, des Meißels 54 oder der Lufdüse 56. Die Absaugvorrichtung A weist einen Abscheider für Partikel und Staub auf. Der Durchflußsensor DS ist im Hohlraumteil 81 angeordnet.

Die Absaugöffnung wird durch einen Absaugschlitz 178 im Zwischenboden 32 an dessen hinteren Ende gebildet. Die Länge des Absaugschlitzes 178 kann der Breite des Zwischenbodens 32 entsprechend oder geringer bemessen sein. Von der Hinterkante des Zwischenbodens 32 erstreckt sich parallel zur Rückwand 179 des Sammelkastens 103 eine Trennwand 181 bis in die Nähe des Unteren Endes des Sammelkastens 103, die sich bis zu den schrägen Seitenwänden 182 des Sammelkastens 103 erstreckt und somit einen sich von Absaugschlitz 178 nach unten erstreckenden Absaugschacht 18 begrenzt, der unten durch eine die untere Kante der Trennwand 181 mit der Rückwand 179 verbindende Bodenwand 184 verschlossen ist. Da die Seitenwände 182 auch den Absaugschacht 183 seitlich begrenzen, konvergiert dieser nach unten ebenfalls.

Um zu verhindern, daß Strahlmittel vom Zwischenboden 32 in den Absaugschlitz 178 fällt, ist an dessen Vorderkante eine Stegwand 181a angeordnet, die sich seitlich bis zu den Seitenwänden 9 und nach oben bis etwa zur mittleren Arbeitsraumhöhe und seitlich den Absaugschlitz umgibt oder sich bis zu den Seitenwänden erstreckt. Hierdurch wird der Absaugschacht über den Zwischenboden 32 hinaus nach oben verlängert. Vorzugsweise ragen die deponierten Strahldüsen 52a,52b,52c und ggfls. auch die deponierte Luftdüse 56 in den verlängerten Absaugschacht 183 hinein.

Oberhalb der Bodenwand 184 ist in der Rückwand 179 ein vorzugsweise rundes Loch 185 vorgesehen, von dessen Rand sich ein Anschlußstutzen 186 nach unten und hinten erstreckt. Auf den Anschlußstutzen 186 ist mittels eines Rohrstutzens 187 ein Absaugschlauch 188 aufsteckbar und klemmbar, der sich zum vorderen Bereich des Untergehäuses 4 und z.B. zwischen den zweiten und dritten Strahlmittelbehälter 17b,17c erstreckt, wo im Bereich der Schublade 16 die Bodenwand des Gehäuses fehlt. Von hier aus erstreckt sich der Absaugschlauch 188 nach unten, wobei er einen Anschlußstutzen für einen daran anzuschließenden Absaugschlauchabschnitt der Absaugvorrichtung A bilden kann.

## Patentansprüche

1. Bearbeitungsgerät (1) zum Bearbeiten von feinwerktechnischen, insbesondere dentaltechnischen Werkstücken in einem von einem Gehäuse (2) umgebenen Bearbeitungsraum (31), der durch zwei Durchgriffsöffnungen (36) und ein Sichtfenster (23) im Gehäuse (2) manuell bzw. visuell zugänglich ist, und in dem wenigstens eine Strahldüse (52a, 52b, 52c) insbesondere einer Einwegstrahleinrichtung zum Strahlen der Werkstücke angeordnet ist, die durch eine Zuführungsleitung (53a, 53b, 53c) mit dem Innenraum eines vorzugsweise zylindrischen Strahlmittelbehälters (17a, 17b, 17c) verbunden ist,
**dadurch gekennzeichnet,**
daß der Bearbeitungsraum (31) durch Trennwände (105, 179) von einem Hohlraum (81) des Gehäuses (2) getrennt ist, daß der Strahlmittelbehälter (17a, 17b, 17c) mittels eines ihn tragenden Tragteils (16) im Hohlraum (81) des Gehäuses (2) angeordnet und durch eine Beschickungsöffnung in der Gehäusewand zu beschicken ist, die durch eine Verschlußwand verschließbar ist, daß die Zuführungsleitung (53a, 53b, 53c) wenigstens im Bereich des Hohlraums (81) biegsam ist, und daß das Tragteil (16) mit dem Strahlmittelbehälter (17a,17b,17c) zwischen seiner im Gehäuse (2) befindlichen Arbeitsstellung durch die Beschickungsöffnung hindurch in eine Beschickungsstellung verstellbar ist, in der der Strahlmittelbehälter (17a,17b,17c) wenigstens mit seiner Füllöffnung, vorzugsweise insgesamt außerhalb des Gehäuses (2) angeordnet ist.

2. Bearbeitungsgerät nach Anspruch 1,
dadurch **gekennzeichnet,**
daß das Tragteil (16) in einer zwischen ihm und dem Gehäuse (2) angeordneten horizontalen Führung (16b) verschiebbar ist.

3. Bearbeitungsgerät nach Anspruch 2,
dadurch **gekennzeichnet,**
daß das Tragteil eine Schublade (16) oder ein Wagen ist.

4. Bearbeitungsgerät nach wenigstens einem der vorherigen Ansprüche,
dadurch **gekennzeichnet,**
daß das Tragteil (16) im Bodenbereich des Gehäuses (2) angeordnet ist.

5. Bearbeitungsgerät nach wenigstens einem der vorherigen Ansprüche,
dadurch **gekennzeichnet,**
daß die Beschickungsöffnung in der Frontseite des Gehäuses (2) angeordnet ist und das Tragteil nach vorne zur Bedienungsseite (7) hin herausziehbar ist.

6. Bearbeitungsgerät nach wenigstens einem der vorherigen Ansprüche,
dadurch **gekennzeichnet,**
daß die Verschlußwand für die Beschickungsöffnung durch die Stirnwand (15) der Schublade oder des Wagens gebildet ist.

7. Bearbeitungsgerät nach wenigstens einem der vorherigen Ansprüche,
dadurch **gekennzeichnet,**
daß die Schublade sich etwa über die gesamte Innenbreite des Gehäuses (2) erstreckt und an beiden Seiten horizontal und parallel zueinander abstehende Schubladenschienen (16a) aufweist, die an Führungsschienen (16b) horizontal verschiebbar gelagert sind, die innen an den Seitenwänden (9) des Gehäuses (2) befestigt sind.

8. Bearbeitungsgerät nach wenigstens einem der vorherigen Ansprüche,
dadurch **gekennzeichnet,**
daß das Tragteil (16) ein horizontal angeordnetes Blech oder eine horizontale Schiene (85) aufweist, in der ein vertikales Loch (86) angeordnet ist, in das der Strahlmittelbehälter (17a,17b,17c) von oben einsetzbar und fixierbar ist.

9. Bearbeitungsgerät nach Anspruch 8,
dadurch **gekennzeichnet,**
daß das Blech oder die Schiene ein sich längs der Stirnwand (15) der Schublade (16) oder des Wagens erstreckendes Winkelprofil oder Z-Profil ist, das an der Innenseite der Stirnwand (15) befestigt ist.

10. Bearbeitungsgerät nach wenigstens einem der vorherigen Ansprüche,
dadurch **gekennzeichnet,**
daß der Strahlmittelbehälter (17a,17b,17c) an seinem vertikalen Außenmantel angeformte Befestigungsansätze (60) mit vorzugsweise vertikalen Durchgangslöchern aufweist und mittels die Durchgangslöcher durchfassenden Schrauben am Blech bzw. an der Schiene verschraubt ist.

11. Bearbeitungsgerät nach wenigstens einem der vorherigen Ansprüche,
dadurch **gekennzeichnet,**
daß mehrere, vorzugsweise drei Strahlmittelbehälter (17a,17b,17c) vorgesehen sind, die in einer sich parallel zur Stirnseite (15) der Schublade (16) oder des Wagens innenseitig erstreckenden Reihe angeordnet sind.

12. Bearbeitungsgerät nach wenigstens einem der Ansprüche 1 bis 11,
dadurch **gekennzeichnet,**
daß dem Tragteil (16) ein Schalter (164) angeordnet ist, der mit der elektrischen Steuereinrichtung des Bearbeitungsgerätes (1) so geschaltet ist, daß das Bearbeitungsgerät (1) oder die Strahleinrichtung nur in der Arbeitsstellung des Strahlmittelbehälters (17a,17b,17c) in Betrieb genommen werden kann.

13. Bearbeitungsgerät, insbesondere nach wenigstens einem der vorherigen Ansprüche,
dadurch **gekennzeichnet,**
daß das Gehäuse (2) einen oberen, den Bearbeitungsraum (31) umschließenden kastenförmigen Gehäuseabschnitt (3) aufweist, der gegenüber dem unteren Gehäuseabschnitt (4) zur Vorder- bzw. Bedienungsseite (7) hin gekippt ist, vorzugsweise um etwa 45°, und in dem Zwei Durchgriffslöcher (36) und in der vorderseitigen schrägen Dachwand (12a) des gekippten Gehäuseabschnitts (3) ein Sichtfenster (23) angeordnet sind.

14. Bearbeitungsgerät nach Anspruch 13,
dadurch **gekennzeichnet,**
daß die bedienungsseitigen vertikalen Kantenbereich des oberen Gehäuseteils (3) durch Schrägflächen (11) stark abgeflacht sind, die mit dem Vorderwandteil (8) des oberen Gehäuseteils (3) einen Winkel von vorzugsweise etwa 135° einschließen.

15. Bearbeitungsgerät nach Anspruch 14,
dadurch **gekennzeichnet,**
daß die Schrägflächen (11) parallel zur gekippten Mittelachse (13) des oberen Gehäuseteils (3) angeordnet sind.

16. Bearbeitungsgerät nach Anspruch 14 oder 15,
dadurch **gekennzeichnet,**
daß die Durchgriffslöcher (36) in den Schrägflächen (11) angeordnet sind.

17. Bearbeitungsgerät nach wenigstens einem der Ansprüche 13 bis 16,
dadurch **gekennzeichnet,**
daß zwischen dem oberen und unteren Gehäuseteil (3,4) vorderseitig eine horizontale Taillierung angeordnet ist, deren obere Taillienfläche durch die gekippte Vorderteilwand (8) des oberen Gehäuseteils (3) und deren untere Taillienfläche durch eine nach hinten schräg aufwärts verlaufende Vorderteilwand (14) gebildet ist.

18. Bearbeitungsgerät nach Anspruch 17,
dadurch **gekennzeichnet,**
daß auf der nach hinten schräg aufwärts verlaufenden Vorderteilwand (14) Bedienungselemente für das Bearbeitungsgerät (1) vorgesehen sind.

19. Bearbeitungsgerät nach wenigstens einem der vorherigen Ansprüche,
dadurch **gekennzeichnet,**
daß das Sichtfenster (23) zu öffnen ist und dem vorzugsweise durch eine durchsichtige Scheibe, insbesondere Glasscheibe (27), gebildeten Flügel ein Schalter (165) zugeordnet ist, der mit der elektrischen Steuereinrichtung des Bearbeitungsgerätes (1) so geschaltet ist, daß das Bearbeitungsgerät (1) oder die Strahleinrichtung nur bei geschlossenem Sichtfenster (23) einschaltbar ist.

20. Bearbeitungsgerät nach wenigstens einem der vorherigen Ansprüche,
dadurch **gekennzeichnet,**
daß die Scheibe (27) des Sichtfensters (23) innenseitig eine durchsichtige, verschleißfeste Beschichtung aufweist.

21. Bearbeitungsgerät nach wenigstens einem der vorherigen Ansprüche,
dadurch **gekennzeichnet,**
daß das Tragteil (16) um eine vorzugsweise in seinem unteren Bereich etwa horizontal verlaufende Kippachse nach außen und wieder zurück kippbar ist.

## Claims

1. Machining device (1) for machining precision, in particular dental, workpieces in a machining chamber (31) surrounded by a housing (2), which machining chamber is manually and visually accessible by means of two gripping holes (36) and an inspection window (23) in the housing (2), and in which machining chamber there is arranged at least one jet nozzle (52a, 52b, 52c) in particular of a non-recirculating jet blasting device for blasting the workpieces, which jet nozzle is connected by means of a supply line (53a, 53b, 53c) with the interior of a preferable cylindrical blasting medium container (17a, 17b, 17c),
characterized in that,
the machining chamber (31) is separated by dividing walls (105, 179) from a hollow chamber (81) of the housing (2), in that the blasting medium container (17a, 17b, 17c) is arranged by means of a carrier part (16), carrying the container, in the hollow chamber (81) of the housing (2) and is to be loaded into place through a loading opening in the housing wall which is closable by means of a closure wall, in that the supply line (53a, 53b, 53c) is flexible at least in the region of the hollow chamber (81), and in that the carrier part (16), together with the blasting medium container (17a, 17b, 17c), is adjustable between its working disposition located in the housing (2), through the loading opening, into a loading disposition in which the blasting medium container (17a, 17b, 17c) is arranged at least with its filling opening outside the housing (2), preferably entirely outside the housing (2).

2. Machining device according to claim 1,
characterized in that,
the carrier part (16) is displaceable in a horizontal guide (16b) arranged between it and the housing (2).

3. Machining device according to claim 2,
characterized in that,
the carrier part is a drawer (16) or a carriage.

4. Machining device according to any preceding claim,
characterized in that,
the carrier part (16) is arranged in the floor region of the housing (2).

5. Machining device according to any preceding claim,
characterized in that,
the loading opening is arranged in the front side of the housing (2) and the carrier part can be drawn outwardly to the front towards the operating side (7).

6. Machining device according to any preceding claim,
characterized in that,
the closure wall for the loading opening is formed by means of the end wall (15) of the drawer or of the carriage.

7. Machining device according to any preceding claim,
characterized in that,
the drawer extends approximately over the entire internal width of the housing (2) and has to both sides horizontal and mutually parallel projecting drawer rails (16a) which are mounted horizontally displaceably on guide rails (16b) which are attached internally on the side walls (9) of the housing (2).

8. Machining device according to any preceding claim,
characterized in that,
the carrier part (16) has a horizontally arranged sheet or a horizontal rail (85) in which there is arranged a vertical hole (86) into which the blasting medium container (17a, 17b, 17c) can be set in place from above and fixed in place.

9. Machining device according to any preceding claim,
characterized in that,
the sheet or the rail is an angled profile piece or a Z-profile piece extending longitudinally of the end wall (15) of the drawer (16) or of the carriage, which profile piece is attached to the inner side of the end wall (15).

10. Machining device according to any preceding claim,
characterized in that,
the blasting medium container (17a, 17b, 17c) has, formed on its vertical outer surface, attachment pieces (60) with preferably vertical through holes and is screwed to the sheet or to the rail by means of screws penetrating the through holes.

11. Machining device according to any preceding claim,
characterized in that,
a plurality of, preferably three, blasting medium containers (17a, 17b, 17c) are provided which are arranged in a row extending, on the inside, parallel to the end face (15) of the drawer (16) or of the carriage.

12. Machining device according to any of claims 1 to 11,
characterized in that,
a switch (164) is associated with the carrier part (16) which is so connected with the electrical control device of the machining device (1) that the machining device (1) or the blasting device can only be placed in operation with the blasting medium container (17a, 17b, 17c) in the working disposition.

13. Machining device, in particular according to any preceding claim,
characterized in that,
the housing (2) has an upper box-like housing section (3) surrounding the machining chamber (31), which box-like housing section is tilted relative to the lower housing section (4) towards the forward or operating side (7), preferably by approximately 45°, and in which box-like housing section there are arranged two gripping holes (36) and, in the front-side inclined roof wall (12a) of the tilted housing section (3), an inspection window (23).

14. Machining device according to claim 13,
characterized in that,
the operating-side vertical edge regions of the upper housing part (3) are strongly bevelled or flattened by means of inclined surfaces (11) which make an angle of preferably approximately 135° with the forward wall part (8) of the upper housing part (3).

15. Machining device according to claim 14,
characterized in that,
the inclined surfaces (11) are arranged parallel to the tilted middle axis (13) of the upper housing part (3).

16. Machining device according to claim 14 or 15,
characterized in that,
the gripping holes (36) are arranged in the inclined surfaces (11).

17. Machining device according to any of claims 13 to 16,
characterized in that,
between the upper and lower housing parts (3, 4) there is arranged on the forward side a horizontal waist region, the upper waist surface of which is formed by means of the tilted forward part wall (8) of the upper housing part (3) and the lower waist surface of which is formed by means of a forward part wall (14) extending rearwardly with an upward inclination.

18. Machining device according to claim 17,
characterized in that,
operating elements for the machining device (1) are provided on the forward part wall (14) extending rearwardly with an upward inclination.

19. Machining device according to any preceding claim,
characterized in that,
the observation window (23) can be opened and there is associated with the opening window, preferably formed by means of a transparent pane, in particular a glass pane (27), a switch (165) which is so connected with the electrical control device of the machining device (1) that the machining device (1) or the blasting device can be switched on only when the observation window (23) is closed.

20. Machining device according to any preceding claim,
characterized in that,
the pane (27) of the observation window (23) has internally a transparent wear-resistant coating.

21. Machining device according to any preceding claim,
characterized in that,
the carrier part (16) is tiltable outwardly, and back again, around a tilt axis preferably in its lower region and extending approximately horizontally.

## Revendications

1. Appareil d'usinage (1) pour l'usinage de pièces mécaniques de précision, notamment de pièces de dentisterie, dans une chambre d'usinage (31) entourée d'une enveloppe (2), à laquelle on accède manuellement et visuellement par deux ouvertures (36) d'intervention et une fenêtre (23) aménagées dans l'enveloppe et dans laquelle est disposée au moins une buse de projection (52a, 52b, 52c), notamment d'un dispositif de projection sans récupération, pour le traitement des pièces qui est connectée par l'intermédiaire d'une conduite d'alimentation (53a, 53b, 53c) à l'espace intérieur d'un réservoir (17a, 17b, 17c) à agent de projection, de préférence cylindrique, caractérisé par le fait que la chambre d'usinage (31) est séparée d'une cavité (81) de l'enveloppe (2) par des cloisons (105, 179), par le fait que le réservoir (17a, 17b, 17c) à agent de projection est disposé dans la cavité (81) de l'enveloppe (2) au moyen d'un élément support (16) qui le supporte et peut être rempli par une ouverture de chargement aménagée dans la paroi de l'enveloppe et fermée par un panneau de fermeture, par le fait que, au moins dans la région de la cavité (81), la conduite d'alimentation (53a, 53b, 53c) est flexible et par le fait que l'élément support (16) et le réservoir (17a, 17b, 17c) à agent de projection peuvent être amenés à travers l'ouverture de chargement de la position de travail, à l'intérieur de l'enveloppe (2), dans une position de chargement dans laquelle l'ouverture de remplissage du réservoir (17a, 17b, 17c) à agent de projection, de préférence la totalité dudit réservoir, se trouve à l'extérieur de l'enveloppe (2).

2. Appareil d'usinage selon la revendication 1, caractérisé par le fait que l'élément support (16) peut coulisser dans une glissière (16b) disposée horizontalement entre l'élément support et l'enveloppe (2).

3. Appareil d'usinage selon la revendication 2, caractérisé par le fait que l'élément support est un tiroir (16) ou un chariot.

4. Appareil d'usinage selon au moins une des revendications précédentes, caractérisé par le fait que l'élément support (16) est disposé dans la région du fond de l'enveloppe (2).

5. Appareil d'usinage selon au moins une des revendications précédentes, caractérisé par le fait que l'ouverture de chargement est disposée dans la face avant de l'enveloppe (2) et que l'élément support peut être sorti en le tirant vers l'avant, en direction de la face de commande (7).

6. Appareil d'usinage selon au moins une des revendications précédentes, caractérisé par le fait que le panneau de fermeture de l'ouverture de chargement est formé par la paroi frontale (15) du tiroir et du chariot.

7. Appareil d'usinage selon au moins une des revendications précédentes, caractérisé par le fait que le tiroir s'étend sensiblement sur toute la largeur intérieure de l'enveloppe (2) et présente, sur les deux côtés, des glissières de tiroir (16a) horizontales, mutuellement paràllèles et espacées qui sont montées de manière à coulisser horizontalement sur les glissières (16a) fixées côté intérieur sur les parois latérales (9) de l'enveloppe (2).

8. Appareil d'usinage selon au moins une des revendications précédentes, caractérisé par le fait que l'élément support (16) comporte une tôle disposée horizontalement ou un rail (85) horizontal dans lequel est aménagé un trou (86) vertical, dans lequel le réservoir (17a, 17b, 17c) à agent de projection est mis en place et immobilisé par le dessus.

9. Appareil d'usinage selon au moins une des revendications précédentes, caractérisé par le fait que la tôle ou le rail est une cornière ou un profilé en Z qui s'étend le long de la paroi frontale (15) du tiroir (16) ou du chariot et est fixé sur le côté intérieur de la paroi frontale (15).

10. Appareil d'usinage selon au moins une des revendications précédentes, caractérisé par le fait que le réservoir (17a, 17b, 17c) à agent de projection est pourvu sur son enveloppe extérieure verticale de pattes de fixation (60) venue d'une pièce avec de préférence des trous débouchants verticaux et est fixé sur la tôle ou sur le rail au moyen de vis engagées dans les trous débouchants.

11. Appareil d'usinage selon au moins une des revendications précédentes, caractérisé par le fait qu'il est prévu plusieurs, de préférence trois réservoirs (17a, 17b, 17c) à agent de projection qui sont disposés en une rangée qui s'étend côté intérieur, parallèlement à la face frontale (15) du tiroir (16) ou du chariot.

12. Appareil d'usinage selon au moins une des revendications précédentes, caractérisé par le fait qu'un commutateur (164) est associé à l'élément support (16) lequel commutateur est connecté au dispositif électrique de commande de l'appareil d'usinage (1) de manière telle que l'appareil d'usinage (1) ou le dispositif de projection ne puisse être mis en marche que lorsque le réservoir (17a, 17b, 17c) à agent de projection est dans sa position de travail.

13. Appareil d'usinage selon au moins une des revendications précédentes, caractérisé par le fait que l'enveloppe (2) comporte une partie d'enveloppe (3) supérieure en forme de caisson qui entoure la chambre d'usinage (31), est inclinée vers la face avant ou vers la face de commande (7), de préférence de 45° par rapport à la partie d'enveloppe (4) inférieure, et est pourvue de deux ouvertures (36) d'intervention et, dans la paroi avant (12a) inclinée formant toit de la partie d'enveloppe (3) inclinée, d'une fenêtre (23).

14. Appareil d'usinage selon la revendication 13, caractérisé par le fait que la région verticale des angles de la partie (3) supérieure de l'enveloppe est fortement tronquée par des surfaces inclinées (11) qui forment un angle, de préférence de 135° environ, avec la partie de paroi (8) antérieure de la partie d'enveloppe (3) supérieure.

15. Appareil d'usinage selon la revendication 14, caractérisé par le fait que les surfaces inclinées (11) sont parallèles à l'axe médian (13) incliné de la partie d'enveloppe (3) supérieure.

16. Appareil d'usinage selon la revendication 14 ou la revendication 15, caractérisé par le fait que les ouvertures (36) sont aménagées dans les surfaces inclinées (11).

17. Appareil d'usinage selon au moins une des revendications 13 à 16, caractérisé par le fait qu'il est prévu entre les parties d'enveloppe (3, 4) supérieure et inférieure, côté avant, une zone horizontale tronquée dont la surface supérieure est formée par la paroi (8) avant inclinée de la partie d'enveloppe (3) supérieure et la surface inférieure est formée par une paroi avant (14) inclinée qui s'étend vers le haut, vers l'arrière.

18. Appareil d'usinage selon la revendication 17, caractérisé par le fait qu'il est prévu sur la paroi avant (14) inclinée qui s'étend vers le haut, vers l'arrière des éléments de commande pour l'appareil d'usinage (1).

19. Appareil d'usinage selon au moins une des revendications précédentes, caractérisé par le fait que la fenêtre (23) peut être ouverte et qu'un contacteur (165) est associé au battant formé d'une vitre, de préférence transparente, notamment d'une vitre (27) en verte, lequel commutateur est connecté au dispositif électrique de commande de l'appareil d'usinage (1) de manière telle que l'appareil d'usinage (1) ou le dispositif de commande ne puisse être mis en marche que lorsque la fenêtre est fermée.

20. Appareil d'usinage selon au moins une des revendications précédentes, caractérisé par le fait que la vitre (27) de la fenêtre (23) est pourvue côté intérieur d'un revêtement transparent résistant à l'usure.

21. Appareil d'usinage selon au moins une des revendications précédentes, caractérisé par le fait que l'élément support (16) peut pivoter en direction de l'extérieur et en direction de l'intérieur autour d'un axe de pivotement sensiblement horizontal, situé de préférence dans sa région inférieure.
